(19) **Europäisches Patentamt**
**European Patent Office**
**Office européen des brevets**

(11) **EP 2 181 417 B1**

(12) **EUROPEAN PATENT SPECIFICATION**

(45) Date of publication and mention
of the grant of the patent:
**09.09.2015 Bulletin 2015/37**

(51) Int Cl.:
***G06K 9/20*** *(2006.01)*     ***G06K 9/00*** *(2006.01)*

(21) Application number: **08801753.8**

(86) International application number:
**PCT/EP2008/007073**

(22) Date of filing: **29.08.2008**

(87) International publication number:
**WO 2009/027090 (05.03.2009 Gazette 2009/10)**

(54) **METHOD AND SYSTEM FOR ONLINE CALIBRATION OF A VIDEO SYSTEM**

VERFAHREN UND SYSTEM ZUR ONLINE-KALIBRIERUNG EINES VIDEOSYSTEMS

PROCÉDÉ ET SYSTÈME D'ÉTALONNAGE EN LIGNE D'UN SYSTÈME VIDÉO

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.08.2007 US 967204 P**

(43) Date of publication of application:
**05.05.2010 Bulletin 2010/18**

(73) Proprietor: **Valeo Schalter und Sensoren GmbH
74321 Bietigheim-Bissingen (DE)**

(72) Inventor: **KUEHNLE, Andreas
Villa Park, CA 92861 (US)**

(56) References cited:
**US-B1- 6 285 393**

**Description**

Field of the invention

The present invention relates to a method and system for online calibration of a video system, particularly in connection with an image-based road characterization by image processing methods and systems for detecting roadway scenes in vehicles.

Video-based systems can provide position measurements of objects observed via video camera. An aspect of the position measurement involves establishing the orientation of the video camera (i.e., does the camera point straight ahead or downward, is it pointing left or right, and so on).

Background of the invention

In motor vehicles several so called driving assistance systems are known, often just called assistants, using video images captured by a single video camera or by several video cameras arranged e.g. in the front and/or in the back of a motor vehicle to detect e.g. road lane markings and road boundaries, obstacles, other road users and the like, or to survey and/or display the frontal and/or back area of a motor vehicle e.g. when parking, particularly when backing into a parking space or when parallel parking.

As described in EP 1 400 409 A3, also camera and video images are used with an image-evaluating system or also so-called vision-based driver assistance system for detecting the surrounding of the vehicle. This evaluation considers also objects, obstacles, lane and lane markings as well as distances. Hereby an image sensor is used, whose pixels or group of pixels display the surrounding of the vehicle regarding intensity, contrast, color or other parameter with appropriate data processing means to be evaluated.

Further previous art is known, for example, from "Video stabilization for a camcorder mounted on a moving vehicle", IEEE Transactions on Vehicular Technology, vol. 53, No. 6, November 2004. Nearly all approaches rely on finding markings, edges, or similar defining features - on both sides of the lane or road - and determining where these intersect, as this is near the vanishing point.

US patent 7,209,832 uses straight line extrapolation of the lane markings on both sides to determine the vanishing point. Similarly, US patent 7,095,432 also uses both sides. The significant difference here is that one does not need both sides. Furthermore, one can reconstruct where the vanishing point would be, even when driving in curves.

The document US 6,285,393 B1 already discloses a method for online calibration of a vehicle camera system according to the header of claim 1. This methods makes use of vanishing points that are evaluated from frames of a camera image containing identified markings or edges on a road. When only one side of a road or lane marking or an edge is visible in any given frame of an image at a time a long term average vanishing point location is calculated with time-filtering methods from a sequence of images and from the time-averaged vanishing point location coordinates, the static yaw and pitch angle of the camera is deduced.

Summary of the invention

It is thus an object of the invention to develop a new method and system for online calibration for a video position measurement system installed in a moving vehicle, for use on roads, which is easily able to measure the relation between the vehicle and the road markings. The invention is especially advantageous in vehicles that are equipped with a lane support system.

On the basis of a method for online calibration of a vehicle video system with vanishing points, evaluated from frames of a camera image contains identified markings, scenes or edges on a road, the object of the invention is met by a advantageous method and system for the calibration process. Implementation of the calibration system involves establishing where the vanishing point is located in the video image.

Referring to the invention the vanishing points are located by finding or extrapolating at least at one left- and/or right-hand side markings or edges of a road to an intersection point whereby a long term average vanishing point location is calculated with time-filtering methods from a sequence of images even when only one side of a road or lane marking or an edge is visible in any given frame of an image at a time, and from the time-averaged vanishing point location coordinates, the static yaw and pitch angle of the camera is deduced.

In more detail an initial guess for the location of the vanishing point is used, and when a marking is found on one side of the road in a first frame, then the first vanishing point moves orthogonally toward this marking, this by a distance linearly proportional to the perpendicular distance to the marking, weighted by a time dependent value that decreases each time the marking , or a second marking from a second frame, is found on a side, for getting a new vanishing point location at a refined location after the first frame and a new vanishing point, refined after that frame and so on, so that the initial guess vanishing point moves toward the true location, making smaller corrections as time continues and the current location approaches the final value.

The vanishing point location successive refinement system can use recursive filtering, such as an averaging filter, whereby if these filters may reject measurements too far from the refined value, characterizing these as outliers and hence as not useful measurements. Further is it possible, to locate a vanishing point by extrapolation of lane markings, these fitted with a polynomial model, where the uncertainty of each line fitting entry point is related to the size of the onto the road projected pixel of the frames at that distance.

The invention relates also to a method for finding a vanishing point from images, based on the forward extrapolation of road markings, with satisfaction of plausibility conditions required before the extrapolation is done, whereby the plausibility conditions may include sufficient distance in the image plane between the most separated points defining a marking, sufficient distance on the ground in the road plane between the most separated points defining a marking, sufficient vehicle speed, sufficient angle between the extrapolated markings, and/or sufficient certainty in the marking locations.

With an alternative example not pertaining to the present invention for online calibration of a vehicle video system with vanishing points, evaluated from frames of a camera image containing identified markings on a road, the vanishing points are located by exploiting the regularity of repeated road markings, such as dashed patterns, to determine the camera pitch angle, or it is possible with an evaluation from identified scenes on a road, that the vanishing points are located by using the change in spatial frequency of textures on the surface ahead as an object to determine the camera pitch angle, whereby a long-term average vanishing point location is calculated with time-filtering methods from a sequence of images.

An advantageous embodiment of the invention is built by a system for online calibration, as described above, that contains an image processing apparatus with an electronic camera for a video-based detection of the road ore scenes in front of the moving vehicle and a computer based electronic circuit. The computer based electronic is able to define the vanishing point and hence deduce the camera pitch and yaw angles by extrapolation of the road markings scenes or edges, with camera distortion and optical axis location accounted for, to sub pixel precision, with time filtering used for successive refinement.

More specifically the proposed system allows that the vanishing point is accounted for variable per driving trip vehicle loading effects, such as with a heavily loaded vehicle trunk, whereby such vehicle loading effects normally adversely affect lane departure warning and similar road metrology systems, where the pitch and yaw angles are accurately needed.

The system can use vehicle inputs, such as steering angle, yaw rate or differential wheel speed, to determine the approximate local road curvature, which in turn is used to unbend the road markings found in an image, whereby from this unbent road marking image, extrapolation is used to determine the vanishing point and camera orientation.

A computer program product stored on a computer usable medium comprising computer readable program means for causing a computer to perform the method of anyone of the claims 1 to 8 or the system of claim 9 or 10, wherein said computer program product is executed on a computer.

In a particularly preferred embodiment of the invention, said method is performed by a computer program product stored on a computer usable medium comprising computer readable program means for causing a computer to perform the method mentioned above, wherein said computer program product is executed on a computer.

The foregoing, together with other objects, features, and advantages of this invention can be better appreciated with reference to the following specification, claims and drawings.

Brief description of the drawings

Preferred embodiments of the invention are described in the following with reference to the drawings:

Fig. 1a, 1b shows an example of a camera image of a scene with a road, detected by a camera on a vehicle, whose sides converge in a vanishing point.

Fig. 2. shows schematically a side view of the camera.

Fig. 3 shows schematically a top view of the camera on a straight road.

Fig. 4 shows schematically how a vanishing point of a road can be calculated sequentially.

Fig. 5 shows in a flow chart steps how a vanishing point location and a refinement scheme are combined.

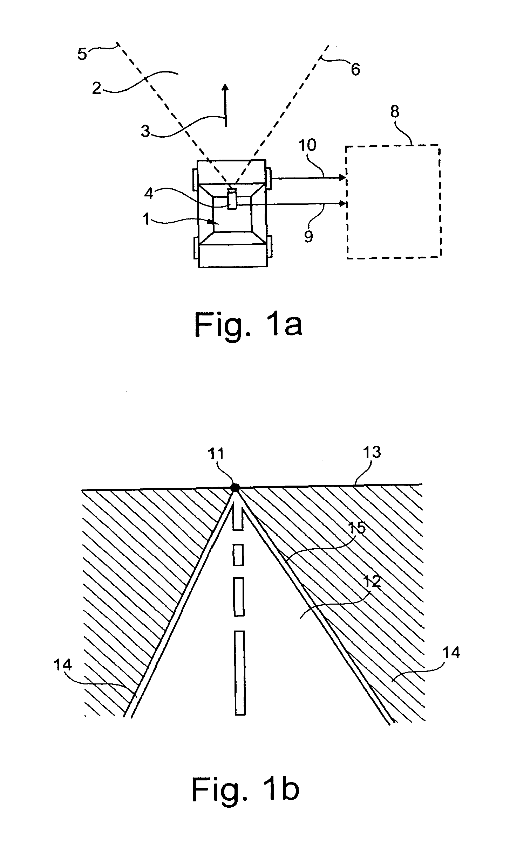

Fig. 1a shows schematically a situation of a vehicle 1 as a carrier of a video image processing system, which moves forward on a road 2 in the direction of arrow 3. The video image processing system of the vehicle 1 contains a digital video camera 4 as an image sensor, which evaluates a road range between broken lines 5 and 6. A computer based electronic circuit 8 evaluates the signal at an input 9, produced by the digital data of the camera 4. Additionally at an input 10 also the current speed data of the vehicle 1 can be evaluated.

The evaluation range of the road 2 can also be seen as a video image of the above described video image processing system as shown in Fig. 1 b. In particular Fig. 1b shows an example image of scene, detected by camera 4 mounted on or in the vehicle 1, shown in Fig. 1b, which has a vanishing point 11 located where a road 12 disappears ('vanishes'), so at the horizon 13, where its two sides 14 and 15 converge. Objects appear to emerge from the vanishing point 11 as one approaches them, or recede into as they move away.

The location of the vanishing point 11 in the shown image is related to the pitch and yaw angle of the camera 4 viewing the scene. Specifically, the height of the vanishing point 11 in the image is related to the pitch (downward or upward) angle of the camera 4. If the camera 4 is pointed more downward, then the vanishing 11 point moves up. Similarly, the lateral location of the vanishing point 11 in the image is related to the yaw angle (to the left or right) of the camera 4. If the camera 4 is turned to the left, say, then the vanishing point 11 will move to the right in the image. We can thus deduce the camera pitch and yaw angles from the vanishing point location. The camera roll angle can measured by other means.

Knowledge of the location of the vanishing point 11, together with assumptions about what the camera 4 sees, makes it possible to determine and continually refine the camera 4 orientation relative to the world (scene). The basic assumption used here is that the road 12, at least near the camera 4, is flat. Note that this does not mean that the road 12 is always level - just that it is locally approximately planar.

The present invention does not require finding markings, edges, or similar defining features for both sides of a lane or a road 12, to determine the vanishing point 11. Furthermore, the present invention allows reconstructing where the vanishing point 11 would be, even when driving in curves.

*Vertical location of vanishing point related to camera pitch angle*

The vanishing point 11 is located on the same level as the horizon 13. A method according to an embodiment of the present invention proceeds by finding the vertical location of the vanishing point 11 in the camera image. We know the vertical location of the camera's optical axis from an earlier calibration, so we can accumulate the difference between these two locations over time. The long term average of this difference is directly related to the (static) camera pitch angle. Dynamic vehicle pitching cannot contribute to the value as it must on average have a value of zero (should it not, then the vehicle would have to plow down into or rise off the ground over the long term).

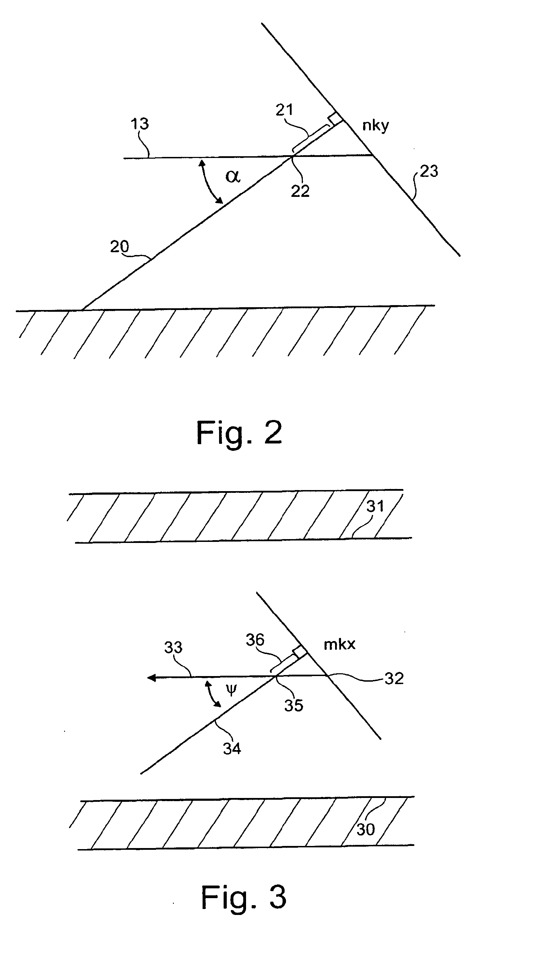

Fig. 2 shows schematically the geometric relations of a side view of the camera 4. The camera 4, which is assumed to be unrolled, is pitched downward with an unknown pitch angle $\alpha$. The horizon projects onto a row 23 in the video image. The angle $\alpha$ is given by the ray 20 (optical axis ray) and the horizon 13. The horizon 13 location in the image row 23 the pitch angle $\alpha$ as shown in the following relation

$$\alpha = \tan^{-1}\left(\frac{n \cdot ky}{FL}\right)$$

where n is the number of rows between R and the optical axis row 20, ky is the vertical pixel size and FL is the focal length 21. The ray 20 (optical axis) and 21 (focal length FL) have an intersection at focal point 22.

*Horizontal location of vanishing point related to camera yaw angle*

Fig. 3 shows schematically the geometric relations of a top view of the camera 4 on a straight road. The here not shown vehicle 1 (Fig. 1 a) holding the camera 4 is positioned parallel to the road edges 30 and 31, and the vanishing point projects, located on ray 33, onto a column 32 in the video image. Ray 33 is parallel to the road edges 30 and 31, thus passing through the vanishing point, passing through the (pinhole) lens, at an angle $\psi$ with respect to the ray 34 (optical axis ray) of the camera.

It can be seen that the ray 33, being parallel to the roadsides, enters the vanishing point 11 in Fig. 1a, which shows what the camera 4 sees. Any other direction for the ray 33 will not pass through the vanishing point on column C 32, and hence the external angle $\psi$ in the world is equal to the internal camera angle $\psi$, this between the optical axis column 34 location on the imager and the vanishing point's column 32 location. The difference in the optical axis 34 and vanishing point lateral locations gives the yaw angle $\psi$ as shown by the following relation

$$\psi = \tan^{-1}\left(\frac{m \cdot kx}{FL}\right)$$

where m is the number of columns between the column 32 containing the vanishing point and the optical axis 34, kx is the horizontal pixel dimension and FL is the focal length 36.

A basic assumption is that the vehicle 1 is on average parallel to the road edges 30,31.
If it were not, then the vehicle 1 would run off the road as time progressed. This assumption means that the (long term) expectation value of the vehicle's yaw angle is zero. Any deviation from zero in the measured long term averaged yaw angle must come from the camera 4 pointing to the side.

We also posit that the road between the edges 30 and 31 must on average be straight (this is not the case on test tracks, though, where one typically drives in an approximate oval). If we average the lateral location of the vanishing point in the image over time, it must correspond to straight ahead. Thus the long term average deviation between the optical axis 34, seen from above, and the ray 32 corresponding to the vanishing point projection must come from the camera's 4 static yaw angle in the vehicle 1.

This long term zero average vehicle yaw angle assumption makes it possible to determine which way the camera 4 is pointing (to the side or not). Specifically if we accumulate a series of measurements of the internal angle $\psi$ between the optical axis' column 34 and the column 32 containing the vanishing point, then any effects due to dynamic vehicle yawing will on average be zero. Put another way, if the average angle $\psi$ after n samples is $\psi(n)$, then this value converges to the static (relative to the vehicle) yaw angle of the camera 4 over time.

These two long term accumulations, plus knowing that the vehicle's 1 dynamic yaw and pitch angles must have a mean of zero, allow the online calibration system to find the camera 4 orientation from measurements of the vanishing point location. The next sections therefore deal with finding the location of the vanishing point 11, shown in Fig. 1 b.

Four example approaches for vanishing point location estimation according to the present invention are described. The first approach is based on finding two or more markings or edges on of the road, and extrapolating these forward to locate their intersection (and hence the vanishing point). The second approach locates the vanishing point even when only one side is visible at every frame. The third approach not pertaining to the present invention uses the texture scale variation with distance to estimate the horizon location, for locating the vanishing point. The fourth approach reconstructs the vanishing point location even when in curves. The four approaches are described in more detail below.

*First Approach: Vanishing point location and camera calibration by marking extrapolation*

Markings or edges on the road can be found with specialized image filtering methods. Such filters look for contrast or objects of a certain dimension, different than the background, persisting as the vehicle moves, and being consistent with being indications of the direction of travel. For example such markings can be found with methods for lane marking detection using video cameras and vision based image processing procedures. We will presume from here on that the markings or edges have been found.

The location of a point that enters into making the road marking or edge can be described with its (x,y) coordinates in the video image. This location can be given to within a whole pixel or to sub pixel precision. In any case, one lists points (xa1 ... xan, ya1 ..yan) for line or marking a, (xb1 ... xbm, yb1 ... ybm) for line or marking b, and so on. The number of points found for each marking (n and m in the preceding example) need not be the same.

Two or more non-collocated points define a line (so two or more marking points in the image, on one side, define a line and direction on that side). Two nonparallel, coplanar, lines intersect (so two lines or markings in the image, at an angle to each other, intersect). The point of intersection of the lane or road markings in an image of the road is near the vanishing point. With time-filtering and certain plausibility conditions required of the points before they are used, a refined, long term average of the vanishing point location can be calculated. From the refined vanishing point, one can calculate the camera orientation, as described earlier.

The line is defined as follows. Points on the line or marking are given by their (x,y) values. These can be whole- or sub-pixel values. In both cases, we remove the lens distortion by using an inverse lens model. The inverse lens model requires knowledge of the location of the lens optical axis on the imager, as well as the degree and type of distortion. This distortion removal gives a new (x,-y) location with sub pixel values; for example the point (100,200) may in its distortion-free form be at (98.23, and 202.65).

The distortion corrected points then have a line fitted through them, this being done in the image plane. If there are more than two points, then a least-squares fit is done. A least median squares fit may also be used when noisy imagery or poor quality markings are detected. For simplicity one may also just fit a line through the two most separated points.

The lines fitted to these - two or more - markings then define a point of intersection, which is then near the vanishing point. Since there is uncertainty in the marking finding and line fitting, time-averaging is used to improve the estimate of the vanishing point location.

When three or more markings are used, more than one point of intersection may be defined. These multiple intersection points may be averaged into one, only the one or two intersection points nearest the current filtered vanishing point location may be used, or similar weighted subsets may be taken to further reduce noise. The simplest system uses only the leftmost and rightmost road markings to determine the vanishing point. We may also use just those markings that we are most sure are markings, or whose location is best determined.

From the time-averaged vanishing point location coordinates, we deduce the static yaw and pitch angle of the camera, as described above. Transient deviations from the static values are due to the motion of the vehicle carrying the camera. These transient deviations may be of interest also (for example, in answering the question "what is the current pitch angle of the camera?")

The conditions for extrapolation require that the distance between the nearest and furthest marking point found on each side be large enough. We can also require that the local road curvature be near zero, so that the forward marking extrapolation is valid. We also require that the vehicle is moving with at least a certain speed, so that low speed maneuvering, with its possible large yaw angle, is not taking place. One also look at the currently measured pitch angle, and see if it is near enough to the long term average vanishing point before using it to improve the average, this to eliminate large transient pitching effects.

*Second Approach: Vanishing point determination with only one side visible at a time*

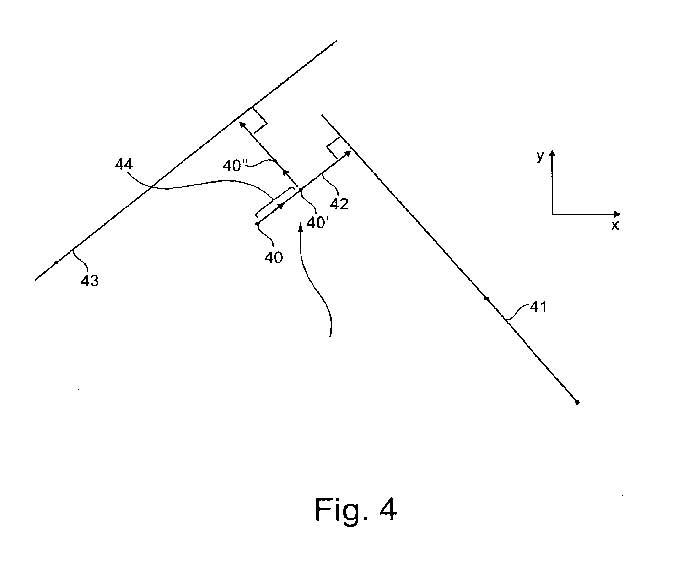

This approach is summarized by example in Fig.4, which shows the general scheme used for adjusting a current vanishing point 40 toward its final value. Online calibration for lane departure warning typically depends on finding the vanishing point of a road. This vanishing point is typically located by finding or extrapolating where the left- and right-hand marking of a road intersect. Online calibration is possible when only one marking (left- or right-hand side) is visible in any given frame. Over time it is required that both markings are visible, but only one at a time. This document provides an example below of how this works.

The vanishing point can also be calculated from a sequence of images even when only side of a road or lane marking is visible in any given frame of an image at a time. It is required that both sides be visible during at some point during the sequence, though not in the same frame(s). Frames without either side visible are allowed, but no refinement of the vanishing point is done then.

The vanishing point is an image location about and through which extrapolated road markings approximately pass. An initial guess for the location of the vanishing point 40 in Fig. 4 is used, which might simply be the center of the image or perhaps a default value given by the type of vehicle the camera system is installed in.

When a marking 41 is found on one side, a extrapolated line or edge from the frame, we move our guess orthogonally (in the image plane) toward this marking like arrow 42, this by a distance linearly proportional to the perpendicular distance to the marking, weighted by a time dependent value that decreases each time a marking 41 or a marking 43 (also an extrapolated line seen from a different frame m later then the frame n concerning marking 41) is found on a side. One gets a new vanishing point 40' at a refined location after frame n and a new vanishing point 40", refined after frame m and so on. As the markings 41, 43 each pass, on average, independently through the vanishing point, this moves the initial guess vanishing point 40 toward the true location, making smaller corrections as time continues and the current location approaches the final value.

We thus do not need to have two intersecting (in their extrapolation) markings visible in any frame and can still estimate the location of the vanishing point.

If a low-pass filter characteristic is desired for the vanishing point adjustment, we update the vanishing point location by a distance proportional to the perpendicular distance to a side, weighted by a non time-varying value. An averaging scheme uses a time-varying weighting value that decreases with time (as in a recursive averaging filter, where the average is weighted more and move heavily and a new measurement's weight decreases with the inverse of the number of measurements).

For a better understanding of the inventive method, here is a simple calculated example. The goal is to find the intersection of two lines, which for simplicity we take as the origin (0,0) here. To further simplify the example, one line will be the x-axis and the other the y-axis, and each of these lines will not vary in its position. One line will be presented to the algorithm at any given time, without the other also being visible, so no point of intersection is defined. One wants to improve an initial guess for the intersection.

First the initial guess for the intersection is arbitrarily located at (-8,-8). The rule to improve the vanishing point location says "move the current guessed point toward the line being presented by half the distance to it, perpendicularly to the line". Applying this rule to the x-position, with the y-axis being presented again and again produces the following changes in x-value:

Starting x at -8

Move to -4
Move to -2
Move to -1
Move to -0.5

And so on. It may be seen that we are moving toward the correct x-location of the intersection.

We now extend this to using both the x- and y-axes. It may be seen that, independent of the order of the presentation of the lines (axes), we will successively move the initial starting point toward the correct value of (0,0). The improvements are independent of each other, but inevitable, and independent of the starting point's location. The vanishing point is, as it where, attracting or pulling the arbitrary starting point towards itself.

Now it is possible to add noise to the system. For simplicity, only one axis is used again, with the extension to two (orthogonal) axes being obvious. One arbitrarily varies the value to move toward, by -0.2, -0.4, -0.1, -0.4, 0, +0.4, -0.3, +0.1 .... (these values are arbitrary, but have a long-term mean value of zero). For clarity here are the first calculations.

Move by (-8- - 0.2)/2 or 3.9 units, so to -4.1
From -4.1 move by (-4.1 - -0.4)/2 units, so to -2.25
From -2.25, move by (-2.25 - - 0.1)/2 units, so to -1.175

And continuing, one moves to -0.7875, then to -0.39375, then to 0.003125 and so on. The convergence toward the correct value of 0 is again inevitable, and independent of the noise (unless the noise is a divergent sequence, which is highly unlikely).

The extension of this example with noise to two perpendicular axes is obvious. The addition of noise partially simulates the movement of the vanishing point as seen from a camera in a moving vehicle.

A final degree of freedom remains, namely changing the angle of the lines. Real road markings come at different angles in the image plane, depending on the width of the road. For simplicity one can vary the angle of just one line, with the extension to two lines of varying angles being again obvious. We vary the angle by values similar to the above noise, so by -20, -40, -10, -40, 0, +40 and so on degrees (again, an arbitrary sequence). The motion will always be toward the lines, moving perpendicularly again. Because of the two-dimensional nature of the problem, the movement will be more complicated, and we show the first steps for clarity. The governing equations, for a marking described by a linear equation of slope m and y-intercept point $b_{mark}$, and a current point at (xn, yn), is that the new location (half way toward the marking) is at:

$$x, new = \frac{x_n}{2} + \frac{y_n + \frac{x_n}{m} - b_{mark}}{2\left(m + \frac{1}{m}\right)}$$

and

$$y, new = \frac{y_n}{2} + \frac{my_n + x_n - mb_{mark}}{2\left(m + \frac{1}{m}\right)} + \frac{b_{mark}}{2}$$

We start with an initial guess of the intersection at (-8, -8), which then moves as:

-1.74, -3.19
-0.59, -1.37

And again the movement toward the true value (0,0) can be seen. The motion is more complicated with varying angles, but even with both markings having various angles, the movement will be toward the origin.

In all cases, a vanishing point of varying location (noisy), having lines of various angles pass through it, leads to the initial guess being refined toward the true value. This is true when the markings vary simultaneously in location and angle, as they do on the real road.

The above mentioned example in Fig. 4 uses axes that are orthogonal to each other for simplicity. More generally, these axes (lines) will not be so, and the changes will not be independent of each other. The attractive nature of the lines - the rule - will still pull the initial guess point toward the correct value however, and the principle remains. The markings must be at a non-zero angle to each other, however, for this adjustment scheme to work.

The rule of taking half the remaining distance, as shown with the distance 44 in Fig. 4 can be improved. Using the half-distance rule means that one will always move at least half the distance of the current noise value, even when one is at or very near the correct final value for a variable. This noise sensitivity can be improved to decrease the size of the step taken, using a recursive average relation, so the size of the nth step taken is $1/n$. As n tends to large values, $1/n$ gets smaller and smaller, and noise has less and less influence on the final value.

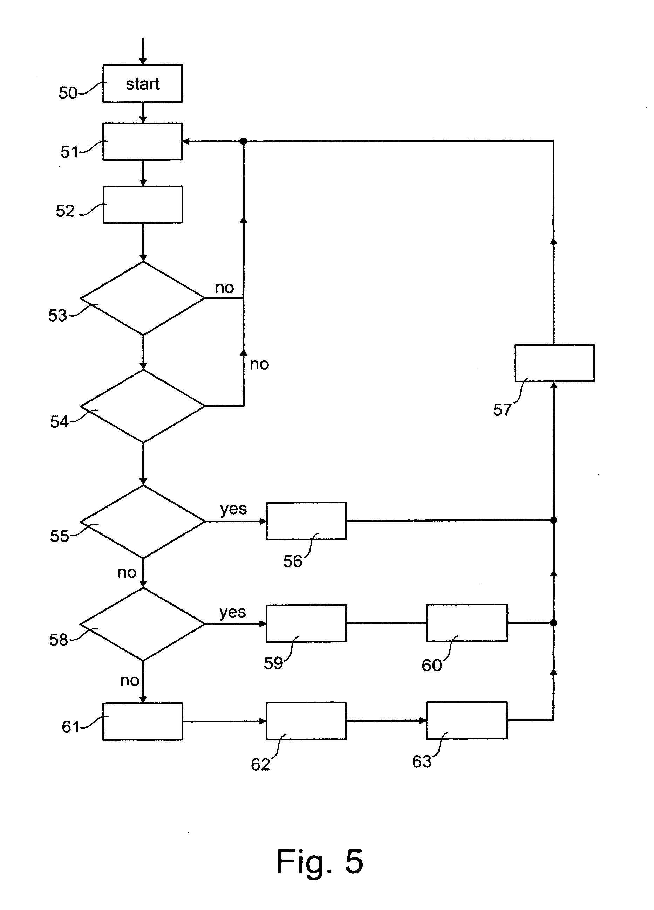

To summarize, the usual schemes for finding the vanishing point of a road require two markings - left and right - to be visible in a frame. Their point of intersection is near the vanishing point. Fig. 5 shows a flowchart with the different paths that are taken, as a function of the number of markings found.

It is not necessary however, for the two markings to ever be visible simultaneously in a single frame. As long as the left and right markings are visible sometimes, one can adjust an initial guess for the vanishing point using the scheme described above, converging towards a correct final value.

The process shown in Fig 5 starts with block 50 and receives an image (block 51) from the camera 4 (see Fig. 1 b). When a lane marking and/or edges (location block 52 and decision block 53) on the road was/were found follows a decision (block 54) and if the plausibility and/or conditions are satisfied then continues the process with block 55. Otherwise the process returns to block 51 and receives a new image.

When only one marking or edge was found (block 55) the vanishing point moves toward the extrapolated side (block 56), then an improved vanishing point is given through an output 57 and back to the receiving image block 51 for repeating the process. If two markings or edges were found (Block 58), an intersection of the extrapolated sides can be computed in block 59, and then the vanishing point moves toward the intersection, and then an improved vanishing point is given through the output 57, and back to the receiving image block 51 for repeating the process.

If more then two markings or edges were found (block 58), the intersections of their extrapolated sides are computed in block 61, and the computed intersection points are combined (Block 62), and then the vanishing point moves toward the point of combination (block 63), and tehn an improved vanishing point is given through the output 57, and back to the receiving image block 51 for repeating the process.

*Third Approach: Vanishing point location from texture scale variation*

Regularly spaced patterns or textures become more closely spaced in an image of them the nearer one is to the vanishing point. One can exploit this changing spacing to deduce the camera tilt angle. Dashed markings on a road are an example of such a regularly spaced pattern. This idea can be extended to regular textures, such as the graininess of asphalt, later.

As an example, suppose one has a pattern that repeats at three meter intervals, starting one meter forward of the camera (call this start point the pattern's phase). Let the camera be pointed downward 3.6 degrees and be 1.5 meters high. We assume a 5.7 millimeter focal length lens.

It can be shown that:

$$\text{Pitch angle + internal angle from optical axis} = \arctan(\text{camera height 1 (phase + n *spacing)})$$

For this pattern phase is 1.0 and n = 0 for the first item. Therefore,

$$3.6 + \text{internal angle} = \arctan(1.5 / 1.0) => \text{internal angle} = 52.716 \text{ degrees downward}$$

For the next item, phase is still 1.0 and n = 1, making internal angle 15.958 degrees downward.

Finally, taking one more item, n = 2, and internal angle becomes 8.496 degrees downward.

Suppose that one does not know the phase, the pattern repetition distance or the camera pitch angle. One does know the camera height, the internal camera angle that each item makes with the optical axis, and which item one is looking at. One has three equations in three unknowns, which can be numerically solved, and the camera pitch angle is thus obtained. When even more measurements are available, the equation set is solved in an error minimization sense.

Up until now we have required a simple, regular spacing of the identifiable marks. This idea can be extended to a textured road, where we assume stationary first order statistics for the texture ahead of the camera (so the mean spacing between features for of any portion of the texture is assumed constant, at least in the area being evaluated). By observing the change in the apparent mean texture spacing, or equivalently, the increasing spatial frequency as we move toward the Vanishing point in the image, one can generate equations similar to the above and again derive the camera pitch angle. The imager used must have sufficient resolution to see the typically small (e.g., ~1cm) variations in the texture. This texture-based measure of the camera pitch angle is the extension in a calculus sense of the dashed marking-based camera pitch angle measurement method described above.

*Fourth Approach: Vanishing point location determination in curves*

The vanishing point appears to move left and right in curves (when the nearby markings are extrapolated to their intersection). Curves thus bias the 'true', straight-ahead vanishing point. One can however remove this bias and reconstruct where the vanishing point would be when driving straight, as if one were not in the curve. In order to do this, one uses vehicle signals that give the radius of the curve one is driving in. These signals may include yaw rate, differential wheel speed, steering angle, etc., from which one can reconstruct the current radius. From this radius one can compute a correction to the image, artificially moving the markings back to where they would be when driving straight ahead. One takes these artificially moved markings and calculates the vanishing point with them, extrapolating forward as done earlier.

## Claims

1. Computer-performed method for online calibration of a vehicle video system using vanishing points, evaluated from frames of a camera image containing identified markings or edges on a road, whereby the vanishing points are located by finding or extrapolating at least at one left- and/or right-hand side markings or edges of a road to a point of intersection, whereby a long term average vanishing point location is calculated with time-filtering methods from a sequence of images even when only one side of a road or lane marking or an edge is visible in any given frame of an image at a time, and from the time-averaged vanishing point location coordinates, the static yaw and pitch angle of the camera is deduced, **characterized in that** an initial guess for the location of the vanishing point (40) is used, and when a marking (41) is found on one side of the road (2) in a first frame (n), the first vanishing point (40) moves orthogonally toward this marking (41), this by a distance linearly proportional to the perpendicular distance to the marking (41), weighted by a time dependent value that decreases each time the marking (41), or a second marking (43) from a second frame (m), is found on a side, for getting a new vanishing point (40') location at a refined location after the first frame (n) and a new vanishing point (40"), refined after frame (m) and so on, that the initial guess vanishing point (40) moves toward the true location, making smaller corrections as time continues and the current location approaches the final value.

2. Method according to claim 1, **characterized in that** a vanishing point location successive refinement system uses recursive filtering, such as an averaging filter, whereby if these filters may reject measurements too far from the refined value, characterizing these as outliers and hence as not useful measurements.

3. Method according to claim 1 or 2, **characterized in** locating a vanishing point by extrapolation of lane markings (41,43), these fitted with a polynomial model, where the uncertainty of each line fitting entry point is related to the size of the onto the road projected pixel of the frames at that distance.

4. Method according to claim 1,2 or 3, **characterized in** finding a vanishing point from images, based on the forward extrapolation of road markings, with satisfaction of plausibility conditions required before the extrapolation is done, whereby the plausibility conditions may include a sufficient distance in the image plane between the most separated points defining a marking, sufficient distance on the ground in the road plane between the most separated points defining a marking, sufficient vehicle speed, sufficient angle between the extrapolated markings, and/or sufficient certainty in the marking locations.

## Patentansprüche

1. Von einem Computer durchgeführtes Verfahren für die Online-Kalibrierung eines Fahrzeugvideosystems unter Verwendung von Fluchtpunkten, ausgewertet aus Einzelbildern eines Kamerabilds, das identifizierte Markierungen oder Ränder an einer Straße enthält, wobei die Fluchtpunkte lokalisiert werden durch Finden oder Extrapolieren mindestens auf einer linken und/oder rechten Seite von Markierungen oder Rändern einer Straße zu einem Kreuzungspunkt, wobei ein langfristiger mittlerer Fluchtpunktort mit Zeitfilterungsverfahren aus einer Sequenz von Bildern selbst dann berechnet wird, wenn nur eine Seite einer Straßen- oder Spurmarkierung oder einer Kante in einem beliebigen gegebenen Einzelbild eines Bilds zu einer Zeit sichtbar ist, und aus den zeitlich gemittelten Fluchtpunktortskoordinaten der statische Gier- und Neigungswinkel der Kamera abgeleitet wird, **dadurch gekennzeichnet, dass** eine anfängliche Schätzung für den Ort des Fluchtpunkts (40) verwendet wird, und wenn eine Markierung (41) auf einer Seite der Straße (2) in einem ersten Einzelbild (n) gefunden wird, der erste Fluchtpunkt (40) sich orthogonal zu dieser Markierung (41) bewegt, somit um einen Abstand linear proportional zum senkrechten Abstand zu der Markierung (41), gewichtet mit einem zeitabhängigen Wert, der immer dann abnimmt, wenn die Markierung (41), oder eine zweite Markierung (43) von einem zweiten Einzelbild (m) auf einer Seite gefunden wird, zum Erhalten eines neuen Fluchtpunkt (40')-ortes an einem verfeinerten Ort nach dem ersten Einzelbild (n) und einem neuen Fluchtpunkt (40"), verfeinert nach Einzelbild (m) usw., dass der anfängliche Schätzungsfluchtpunkt (40) sich zum wahren Ort bewegt, wodurch kleinere Korrekturen mit fortschreitender Zeit vorgenommen werden und sich der aktuelle Ort dem finalen Wert nähert.

2. Verfahren nach Anspruch 1, **dadurch gekennzeichnet, dass** ein Fluchtpunktort-Sukzessive-Verfeinerungssystem eine rekursive Filterung verwendet, wie etwa ein Mittelwertfilter, wobei, falls diese Filter möglicherweise zu weit von dem verfeinerten Wert wegliegende Messungen zurückweisen, diese als Ausreißer kennzeichnen und somit als nicht nützliche Messungen.

3. Verfahren nach Anspruch 1 oder 2, gekennzeichnet im Lokalisieren eines Fluchtpunkts durch Extrapolation von Spurmarkierungen (41, 43), diese mit einem Polynommodell angepasst, wobei die Unbestimmtheit jedes Spuranpassungseintrittspunkts zu der Größe des auf die Straße projizierten Pixels der Einzelbilder bei diesem Abstand in Bezug steht.

4. Verfahren nach Anspruch 1, 2 oder 3, gekennzeichnet im Finden eines Fluchtpunks aus Bildern auf der Basis der Vorwärtsextrapolation von Straßenmarkierungen mit Erfüllung von Plausibilitätsbedingungen, die erforderlich sind, bevor die Extrapolation erfolgt ist, wobei die Plausibilitätsbedingungen möglicherweise einen ausreichenden Abstand in der Bildebene zwischen den eine Markierung definierenden, am meisten getrennten Punkten, ausreichenden Abstand auf dem Boden in der Straßenebene zwischen den eine Markierung definierenden, am meisten getrennten Punkten, ausreichend Fahrzeuggeschwindigkeit, ausreichend Winkel zwischen den extrapolierten Markierungen und/oder ausreichende Gewissheit bei den Markierungsorten beinhalten können.

**Revendications**

1. Procédé exécuté sur ordinateur d'étalonnage en ligne d'un système vidéo de véhicule utilisant des points de fuite, évalués à partir de trames d'une image de caméra contenant des marquages ou des bords identifiés sur une route, selon lequel les points de fuite sont localisés en trouvant ou en extrapolant au moins d'un côté gauche et/ou droit des marquages ou des bords d'une route à un point d'intersection, moyennant quoi un emplacement de point de fuite moyen à long terme est calculé avec des procédés de filtrage temporel à partir d'une séquence d'images même lorsque uniquement un côté à la fois d'une route ou d'un marquage de voie ou d'un bord est visible dans toute trame donnée d'une image, et à partir des coordonnées d'emplacement de point de fuite moyennées dans le temps, le lacet statique et l'angle d'attaque de la caméra est déduit, **caractérisé en ce qu'**une estimation initiale pour l'emplacement du point de fuite (40) est utilisée, et lorsqu'un marquage (41) est trouvé sur un côté de la route (2) dans une premier trame (n), le premier point de fuite (40) se déplace perpendiculairement vers ce marquage (41), d'une distance linéairement proportionnelle à la distance perpendiculaire par rapport au marquage (41), pondérée par une valeur dépendant du temps qui diminue chaque fois que le marquage (41), ou un second marquage (43) d'une seconde trame (m), est trouvé sur un côté, pour obtenir un nouvel emplacement de point de fuite (40') à un emplacement affiné après la première trame (n) et un nouveau point de fuite (40"), affiné après une trame (m), et ainsi de suite, de sorte que le point de fuite estimé initial (40) se déplace vers le véritable emplacement, rendant plus petites les corrections à mesure que le temps s'écoule et l'emplacement actuel approche la valeur finale.

2. Procédé selon la revendication 1, **caractérisé en ce qu'**un système d'affinement successif d'emplacement de point de fuite utilise un filtrage récursif, tel qu'un filtre de moyenne, selon lequel, si ces filtres peuvent rejeter des mesures trop éloignées de la valeur affinée, il caractérise celles-ci comme des données aberrantes et donc comme mesures non utiles.

**3.** Procédé selon la revendication 1 ou la revendication 2, **caractérisé par** la localisation d'un point de fuite par extrapolation de marquages de voies (41, 43), correspondant à un modèle polynomial, où l'incertitude de chaque point d'entrée de raccord de ligne est liée à la taille du pixel projeté sur la route des trames à cette distance.

**4.** Procédé selon la revendication 1, 2 ou 3, **caractérisé par** la découverte d'un point de fuite à partir d'images, sur la base de l'extrapolation vers l'avant de marquages de route, avec une satisfaction des conditions de plausibilité requises avant que l'extrapolation soit effectuée, moyennant quoi les conditions de plausibilité peuvent comprendre une distance suffisante dans le plan image entre les points les plus séparés définissant un marquage, une distance suffisante sur le sol dans le plan de la route entre les points les plus séparés définissant un marquage, une vitesse de véhicule suffisante, un angle suffisant entre les marquages extrapolés et/ou une certitude suffisante des emplacements des marquages.

Fig. 1a

Fig. 1b

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1400409 A3
- US 7209832 B
- US 7095432 B
- US 6285393 B1

### Non-patent literature cited in the description

- Video stabilization for a camcorder mounted on a moving vehicle. *IEEE Transactions on Vehicular Technology,* November 2004, vol. 53 (6